# EUROPÄISCHE PATENTSCHRIFT

(11) **EP 2 225 139 B1**
(45) Veröffentlichungstag und Bekanntmachung des Hinweises auf die Patenterteilung: **10.01.2018**
(21) Anmeldenummer: 08867257.1
(22) Anmeldetag: 29.11.2008
(51) Int. Cl.: B60Q 1/14, B62D 1/04

(54) **SCHALT- UND ANZEIGEMODUL ZWISCHEN KRAFTFAHRZEUG-LENKRAD UND ARMATURENBRETT**
MOTOR VEHICLE
VÉHICULE AUTOMOBILE

(30) Priorität: 21.12.2007 DE 102007062072
(43) Veröffentlichungstag der Anmeldung: 08.09.2010
(73) Patentinhaber: Bayerische Motoren Werke Aktiengesellschaft, 80809 München (DE)
(72) Erfinder: SCHUMANN, Josef, 80995 München (DE); KNOLL, Christian, 80538 München (DE); ZOBL, Martin, 86916 Kaufering (DE); MEINDL, Josef, 93453 Neukirchen (DE); KIRCHLER, Manfred, 80809 München (DE)
(86) Internationale Anmeldenummer: PCT/EP2008/010143
(87) Internationale Veröffentlichungsnummer: WO 2009/083079

(56) Entgegenhaltungen:
- DE-A1- 2 843 022
- DE-A1- 4 307 932
- DE-A1-102005 052 492
- JP-A- 2007 308 051

## Beschreibung

Die Erfindung betrifft ein Kraftfahrzeug mit einem Lenkrad und einem Anzeigefeld.

Zur Anordnung von Bedienelementen in Lenkradnähe sind verschiedene Varianten bekannt:
- Integration der Bedienelemente beispielsweise für den Tempomat oder die Audiobedienung auf dem begrenzten Platz rund um den Pralltopf des Lenkrades;
- Anordnung von Bedienelementen beispielsweise für den Tempomat oder die Audiobedienung in lenkradnahe Bedieninseln, die ausnahmslos unterhalb der Lenkradspindel liegen und deswegen nur sehr schlecht einsehbar sind;
- die Bedienelemente sind mit der Lenksäule starr verbunden und drehen sich nicht mit dem Lenkrad mit, wodurch die Bedienung während der Ausführung von Lenkbewegungen nahezu unmöglich ist.

Aus der DE2843022A1 ist ein Kraftfahrzeug mit einem Lenkrad bekannt, das einen Lenkradkranz mit einem dahinterliegenden Anzeigefeld umfasst.

Aus der DE102005052492A1 ist ein Lenkrad mit einer Vielzahl von Bedienelementen bekannt.

Aus der JP2007308051A ist ein Lenkrad mit Paddle-Schaltern bekannt.

Aus der DE4307932A1 ist ein Lenkgriff mit einer Griffstütze bekannt.

Der Erfindung liegt nun die Aufgabe zu Grunde, ein gegenüber dem Stand der Technik verbessertes Kraftfahrzeug anzugeben, das insbesondere über einfach und sicher zu betätigende Bedienelemente verfügt.

Diese Aufgabe wird durch die Merkmale des Hauptanspruchs gelöst. Vorteilhafte Weiterbildungen der Erfindung sind den abhängigen Ansprüchen zu entnehmen.

Ein erfindungsgemäßes Kraftfahrzeug weist ein Lenkrad und ein hinter dem Lenkrad angeordnetes Anzeigefeld auf. Zumindest ein Bedienelementträger, der zwischen dem Lenkradkranz des Lenkrades und dem Anzeigefeld angeordnet ist, ist fest, insbesondere drehfest und/oder starr mit dem Lenkrad verbunden. Dieser Bedienelementträger bewegt oder dreht sich mit dem Lenkrad mit und ist insbesondere gegenüber dem Lenkrad nicht drückbar oder kippbar.

Dadurch wird erreicht, dass ein durch den Bedienelementträger getragenes Bedienelement auch während einer Lenkbewegung einfach und sicher betätigt werden kann. Außerdem wirken der Bedienelementträger und das dadurch getragene Bedienelement durch die hinter dem Lenkradkranz liegende Anordnung bei einer Lenkbewegung nicht störend. Zudem wird durch den Fahrer leicht erreichbarer, ohnehin vorhandener Fahrzeuginnenraum zur Unterbringung eines Bedienelementes genützt.

Außerdem liegt die bedienelementtragende Fläche innerhalb des Lenkradumfanges (Lenkradkranzumfang). Dadurch können während der Fahrt die durch den Bedienelementträger getragenen Bedienelemente und gewebenenfalls dazugehörige Anzeigen oder Symbole durch den Fahrer einfach und sicher wahrgenommen und bedient werden. Ein Bedienelement kann beispielsweise als Taste oder Wippe ausgeführt sein.

Die bedienelementtragende Fläche und/oder der Bedienelementträger sind überwiegend oder komplett oberhalb der Lenkradspindel, insbesondere dem Schnittpunkt einer Verlängerung der Lenkradspindel und der Pralltopfoberfläche, oder oberhalb des Zentrums des Pralltopfes angeordnet, so dass sie durch einen Fahrer optisch leichter wahrgenommen werden können. Die Wahrnehmung wird nicht oder nicht stark durch Lenkradspeichen gestört Dieser Effekt wird noch verstärkt, wenn die obere Hälfte des Lenkrades kein radiales Lenkradspeichenende aufweist oder wenn sich oberhalb der Lenkradspindel, insbesondere dem Schnittpunkt einer Verlängerung der Lenkradspindel und der Pralltopfoberfläche, oder oberhalb des Zentrums des Pralltopfes kein radiales Lenkradspeichenende befindet.

Vorzugsweise befindet sich an dem der Lenkspindel oder der Drehachse des Lenkrades abgewandten Ende, insbesondere an dem radialen Ende, des Bedienelementträgers eine bedienelementtragende Fläche. Dadurch können Bedienelemente mit Fingern einer den Lenkradkranz haltenden Hand sicher, leicht und bequem erreicht werden.

Besonders bevorzugt ist vorgesehen, dass eine bedienelementtragende Fläche des Bedienelementträgers größer ist als die Querschnittsfläche, insbesondere im - hinsichtlich der radialen Richtung - mittleren Bereich des Bedienelementträgers, des Bedienelementträgers senkrecht zu seiner Längsausrichtung. Dadurch wird erreicht, dass die bedienelementtragende Fläche zur Aufnahme von Bedienelemente ausreichend groß ist, und dennoch durch den Bedienelementträger, insbesondere im - hinsichtlich der radialen Richtung - mittleren Bereich des Bedienelementträgers, nur ein geringer Anteil des Anzeigefeldes, das hinter dem Lenkrad und hinter dem Bedienelementträger angeordnet ist, verdeckt wird. Insbesondere zu diesem Zweck ist der Bedienelementträger vorteilhafterweise T-förmig, U-förmig oder L-förmig ausgeführt.

Vorzugsweise liegt die Flächennormale der bedienelementtragenden Fläche in etwa parallel zur Längsausrichtung des Bedienelementträgers liegt. Dadurch kann auf die entsprechenden auf der bedienelementtragenden Fläche angeordneten Bedienelemente während der Fahrt einfach und sicher die zur Betätigung dieser Bedienelemente erforderliche Kraft ausgeübt werden.

Alternativ dazu ist die Flächennormale der bedienelementtragenden Fläche in Richtung Lenkradspindel nach unten gerichtet, d.h. das untere radiale Ende des Bedienelementträgers oder die untere Kante der bedienelementtragenden Fläche liegt weiter außen als das obere radiale Ende des Bedienelementträgers oder die obere Kante der bedienelementtragende Fläche. Dadurch können die Abstände zwischen verschiedenen Punkten des Lenkrades und der bedienelementtragenden Fläche angenähert oder vereinheitlicht werden. Dadurch wird die Betätigung der verschiedenen Bedienelemente ähnlicher und damit sicherer.

Vorteilhafterweise ist ein Bedienelement, das auf der bedienelementtragenden Fläche, angeordnet ist, durch eine zur Flächennormale der bedienelementtragenden Fläche in etwa parallele Kraft betätigbar. Der Bedienelementträger selbst wird dabei nicht betätigt oder relativ zum Lenkrad bewegt. Dies erleichtert auch die Unterscheidung zwischen einer Betätigung eines Bedienelementes und der Betätigung einer gegebenenfalls in der Nähe liegenden Schaltwippe. Denn die Betätigungsrichtung einer Schaltwippe steht in der Regel senkrecht zu der angegebenen Betätigungsrichtung eines Bedienelementes.

Vorzugsweise weist der Bedienelementträger auf der dem Anzeigefeld abgewandten, dem Fahrer zugewandten Seite eine Anzeigefläche auf. Durch eine entsprechende Darstellung auf der Anzeigefläche kann der Fahrer beispielsweise leicht erfassbar auf die Funktion eines Bedienelementes auf dem Bedienelementträger hingewiesen werden. Vorteilhafterweise wird dazu durch die einem Bedienelement nächste Anzeigefläche die dem Bedienelement zugeordnete Funktion beschrieben.

Die Anzeigefläche liegt vorzugsweise innerhalb des Lenkradumfanges, wobei der radiale Abstand zwischen Anzeigefläche und/oder Bedienelement und Lenkradkranz kleiner als 5 cm oder 4 cm oder 3 cm oder 2 cm oder 1 cm ist. Dadurch wird die Erfassbarkeit und/oder Bedienung weiter verbessert.

Besonders bevorzugt ist die einem Bedienelement zugeordnete Funktion und damit gegebenenfalls auch die Beschreibung (Symbolik) auf der entsprechenden Anzeigefläche, insbesondere automatisch in Abhängigkeit vom Fahrzeugbetriebszustand oder der Fahrsituation, etc. veränderlich. Durch diese Mehrfachbelegung von Bedienelementen wird Platz auf dem bedienelementträger besonders effektiv genützt.

Vorzugsweise trägt das Lenkrad, insbesondere der Pralltopf des Lenkrades, auf der dem Anzeigefeld abgewandten, dem Fahrer zugewandten Seite ein Lenkrad-Bedienelement, wobei als Reaktion auf die Betätigung des Lenkrad-Bedienelement automatisch die einem Bedienelement zugeordnete Funktion und/oder die auf einer Anzeigefläche dargestellte Information geändert wird.

Alternativ oder ergänzend dazu trägt das Lenkrad auf der dem Anzeigefeld abgewandten, dem Fahrer zugewandten Seite ein Lenkrad-Bedienelement, wobei als Reaktion auf die Betätigung eines Bedienelementes automatisch die dem Lenkrad-Bedienelement zugeordnete Funktion und/oder die auf einer Anzeigefläche dargestellte Information geändert wird.

Durch die Ausgestaltung des Lenksystems derart, dass der maximale Lenkradeinschlag in etwa 90 Grad beträgt, ist eine Fahrzeugführung ohne Lenkkranz-Umgreifen möglich. Dadurch ist die Erfindung besonders wirksam in die Praxis umsetzbar. Außerdem kann dann der Lenkradkranz oben offen, insbesondere als oben offener Kreisbogen, ausgeführt sein, wodurch der Blickwinkel auf das Anzeigefeld weiter erhöht wird. Dadurch werden für die Gestaltung des Anzeigefeldes weitere Spielräume geschaffen.

Es ist eine Weiterbildung der Erfindung, dass ein Bedienelementträger auch als Schaltwippe wirkt oder mit einer Schaltwippe identisch ist. In diesem Fall erfüllt der Bedienelementträger zwei Funktionen: das Tragen von Bedienelementen und das Auslösen eines Schaltvorganges aufgrund einer Bedienaktion. Diese Weiterbildung ist besonders platzsparend und dennoch einfach zu bedienen. Denn ein Nutzer wird in der Regel nicht gleichzeitig eine Betätigung eines Bedienelementes auf dem Bedienelementträger und das Umschalten in eine andere Fahrstufe durch den Bedienelementträger oder eine Betätigung des Bedienelementträgers ausführen.

Im Folgenden wird die Erfindung anhand von Beispielen unter Bezugnahme auf die folgenden Figuren näher erläutert:
- Figur 1: zeigt eine vereinfachte Darstellung eines Lenkrades samt Bedienelementträger aus der Perspektive eines Fahrers;
- Figur 2: zeigt eine vereinfachte seitliche Darstellung eines Lenkrades samt Bedienelementträger.

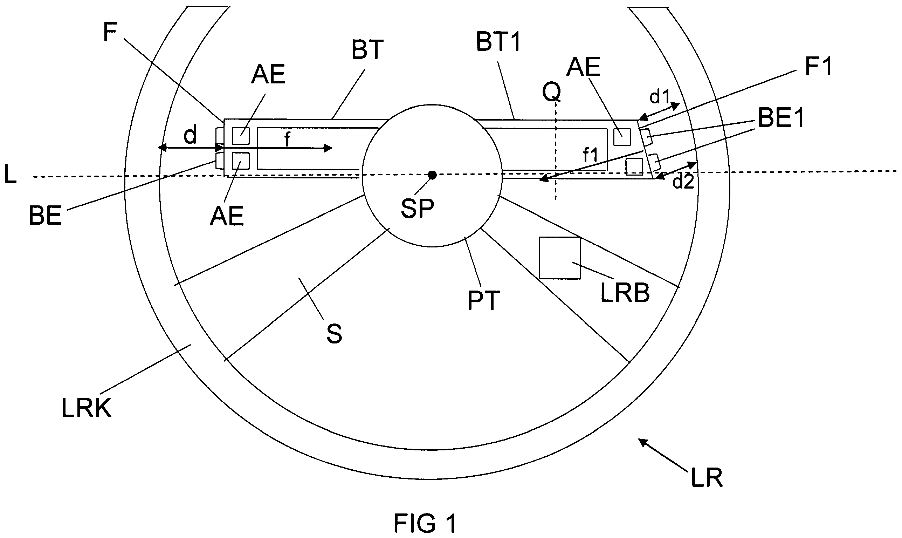

Figur 1 zeigt als Teil eines Kraftfahrzeuges ein Lenkrad LR mit Lenkradspeichen S, welche den Lenkradkranz LRK des Lenkrades LR tragen, und welche an ihrem radialen Ende in den Lenkradkranz LRK übergehen. Am axialen Ende gehen die Lenkradspeichen S in den Pralltopf PT über. Der Pralltopf PT und damit das Lenkrad LR drehen sich um die Drehachse der Lenkradspindel SP. Oberhalb der Lenkradspindel SP oder oberhalb des Zentrums des Pralltopfes PT (in der Darstellung oberhalb der gestrichelten Linie L) ist kein radiales Lenkradspeichenende vorgesehen.

Hinter dem Lenkrad LR ist ein nicht dargestelltes Anzeigefeld, wie beispielsweise eine Geschwindigkeitsanzeige oder ein Display, angeordnet.

Bezüglich der Richtung der Drehachse des Lenkrades LR ist zwischen dem Lenkradkranz LRK und dem Anzeigefeld zumindest ein U-förmiger Bedienelementträger BT, BT1 angeordnet, der fest, insbesondere drehfest oder starr, mit dem Lenkrad LR verbunden ist. Zu Reparaturzwecken kann dieser Bedienelementträger BT, BT1 selbstverständlich von dem Lenkrad LR gelöst werden.

An dem der Lenksäule oder Lenkradspindel SP abgewandten Ende (radiales Ende) des Bedienelementträgers BT, BT1 befindet sich eine bedienelementtragende Fläche F, F1. Die bedienelementtragende Fläche F, F1 des Bedienelementträgers BT, BT1 ist größer als die Querschnittsfläche Q (hier dargestellt durch die gestrichelte Linie) des Bedienelementträgers BT1 senkrecht zu seiner Längsausrichtung im - hinsichtlich der radialen Richtung oder länglichen Erstreckung - mittleren Bereich des Bedienelementträgers. Die bedienelementtragende Fläche F, F1 liegt innerhalb des inneren Lenkradumfanges. Der Abstand d, d1, d2 zwischen bedienelementtragender Fläche F, F1 und Lenkradkranz, insbesondere Lenkradkranzinnenseite, ist kleiner als 5 cm oder 4 cm oder 3 cm oder 2 cm oder 1 cm.

Die Flächennormale f der bedienelementtragenden Fläche F liegt in etwa parallel zur Längsausrichtung des Bedienelementträgers B. Alternativ dazu ist die Flächennormale f1 der bedienelementtragenden Fläche F1 in Richtung Lenkradspindel SP nach unten gerichtet. In diesem Fall können die Abstände d1, d2 zwischen verschiedenen Punkten des Lenkrades und der bedienelementtragenden Fläche F1 angenähert oder vereinheitlicht werden.

Auf den bedienelementtragenden Flächen F, F1 sind Bedienelemente BE, BE1 angeordnet, welche durch eine zur entsprechenden Flächennormale f, f1 der bedienelementtragenden Fläche F, F1 in etwa parallele Kraft betätigbar sind. Die bedienelementtragenden Flächen F, F1 und/oder die Bedienelementträger BT, BT1 sind überwiegend oberhalb der Lenkradspindel SP oder oberhalb des Zentrums des Pralltopfes (in der Darstellung oberhalb der gestrichelten Linie L) angeordnet.

Die Bedienelementträger BT, BT1 weisen auf der dem Anzeigefeld abgewandten Seite Anzeigeflächen AE auf, die innerhalb des inneren Lenkradumfanges liegen, wobei der radiale Abstand zwischen Anzeigefläche AE und/oder Bedienelement BE, BE1 und Lenkradkranz kleiner als 5 cm oder 4 cm oder 3 cm oder 2 cm oder 1 cm ist.

Durch die einem Bedienelement BE nächste Anzeigefläche AE wird die dem Bedienelement BE zugeordnete Funktion beschrieben. Die einem Bedienelement BE zugeordnete Funktion und damit auch die Beschreibung (Symbolik) auf der entsprechenden Anzeigefläche AE ist automatisch in Abhängigkeit von Fahrzeugbetriebszustand, Fahrsituation, etc veränderlich.

Das Lenkrad LR trägt auf der dem Anzeigefeld abgewandten Seite ein Lenkrad-Bedienelement LRB.

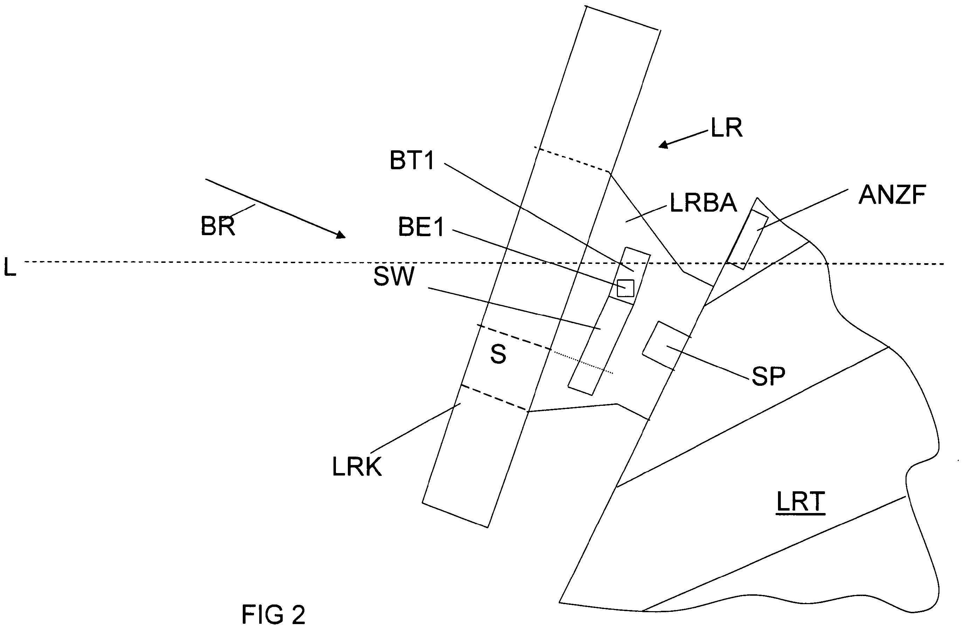

Die Darstellung in Figur 2 zeigt als Teil des Kraftfahrzeuges einen Lenkradträger LRT, der mittelbar oder unmittelbar eine um eine Drehachse drehbare Lenkradspindel SP und ein Anzeigefeld ANZF trägt. Die Lenkradspindel SP trägt mittelbar oder unmittelbar das Lenkrad LR, insbesondere eine Lenkradbasis LRBA, die Bestandteil des Lenkrades ist. Die Lenkradbasis LRBA trägt Lenkradspeichen S oder geht in Lenkradspeichen S über, welche ihrerseits den Lenkradkranz LRK des Lenkrades LR tragen. Kein radiales Ende der Lenkradspeichen S liegt oberhalb des Zentrums des Pralltopfes oder oberhalb des Zentrums des Lenkradkranzes und damit in der Darstellung oberhalb der gestrichelten Linie L

Das Lenkrad LR, insbesondere die Lenkradbasis LRBA, trägt zwischen der Ebene des Lenkradkranzes LRK und einer, insbesondere dazu parallelen, Ebene des Anzeigefeldes ANZF mittelbar oder unmittelbar den Bedienelementträger BT1 und eine oder mehrere Schaltwippen SW. Die Schaltwippe SW ist in Blickrichtung BR des Fahrers nur teilweise durch die Lenkradspeiche S abgedeckt.

Eine alternative Ausführungsform sieht vor, dass der Bedienelementträger auch als Schaltwippe wirkt.

## Patentansprüche

1. Kraftfahrzeug
mit einem Lenkrad (LR), das einen Lenkradkranz (LRK) umfasst,
mit einem hinter dem Lenkrad (LR) angeordneten Anzeigefeld (ANZF) und mit zumindest einem Bedienelementträger (BT, BT1), der zwischen dem Lenkradkranz (LRK) und dem Anzeigefeld (ANZF) angeordnet ist, und der drehfest mit dem Lenkrad (LR) verbunden ist,
**dadurch gekennzeichnet, dass**
eine bedienelementtragende Fläche (F, F1) des Bedienelementträgers (BT, BT1) innerhalb des Lenkradkranzumfanges liegt, und
die bedienelementtragende Fläche (F, F1) und/oder der Bedienelementträger (BT, BT1) überwiegend oder komplett oberhalb der Lenkradspindel angeordnet sind.

2. Kraftfahrzeug nach Anspruch 1,
bei dem sich an dem der Lenkspindel (SP) abgewandten Ende des Bedienelementträgers (BT, BT1) eine bedienelementtragende Fläche (F, F1) befindet.

3. Kraftfahrzeug nach einem der vorhergehenden Ansprüche,
bei dem eine bedienelementtragende Fläche (F, F1) des Bedienelementträgers (BT, BT1) größer ist als eine Querschnittsfläche des Bedienelementträgers (BT, BT1) senkrecht zu seiner Längsausrichtung.

4. Kraftfahrzeug nach einem der vorhergehenden Ansprüche,
bei dem der Bedienelementträger (BT, BT1) T-förmig, U-förmig oder L-förmig ausgeführt ist.

5. Kraftfahrzeug nach einem der vorhergehenden Ansprüche,
bei dem die Flächennormale (f, f1) der bedienelementtragenden Fläche (F, F1) in etwa parallel zur Längsausrichtung des Bedienelementträgers (BT, BT1) liegt.

6. Kraftfahrzeug nach einem der vorhergehenden Ansprüche,
bei dem ein Bedienelement (BE, BE1), das auf der bedienelementtragenden Fläche (F, F1), angeordnet ist, durch eine zur Flächennormale der bedienelementtragenden Fläche in etwa parallele Kraft betätigbar ist.

7. Kraftfahrzeug nach einem der vorhergehenden Ansprüche,
bei dem der Bedienelementträger (BT, BT1) auf der dem Anzeigefeld (AF) abgewandten Seite eine Anzeigefläche (AE) aufweist.

8. Kraftfahrzeug nach einem der vorhergehenden Ansprüche,
bei dem die Anzeigefläche (AE) innerhalb des Lenkradumfanges liegt.

9. Kraftfahrzeug nach einem der vorhergehenden Ansprüche,
bei dem durch die einem Bedienelement (BE, BE1) nächste Anzeigefläche (AE) die dem Bedienelement zugeordnete Funktion beschrieben wird.

10. Kraftfahrzeug nach einem der vorhergehenden Ansprüche,
bei dem die einem Bedienelement (BE, BE1) zugeordnete Funktion veränderlich ist.

11. Kraftfahrzeug nach einem der vorhergehenden Ansprüche,
bei dem das Lenkrad (LR) auf der dem Anzeigefeld (ANZF) abgewandten Seite ein Lenkrad-Bedienelement (LRB) trägt, und bei dem als Reaktion auf die Betätigung des Lenkrad-Bedienelement automatisch die einem Bedienelement zugeordnete Funktion und/oder die auf einer Anzeigefläche dargestellte Information geändert wird.

12. Kraftfahrzeug nach einem der vorhergehenden Ansprüche,
bei dem das Lenkrad (LR) auf der dem Anzeigefeld (ANZF) abgewandten Seite ein Lenkrad-Bedienelement (LRB) trägt, und bei dem als Reaktion auf die Betätigung eines Bedienelementes automatisch die dem Lenkrad-Bedienelement zugeordnete Funktion und/oder die auf einer Anzeigefläche dargestellte Information geändert wird.

13. Kraftfahrzeug nach einem der vorhergehenden Ansprüche,
bei dem der maximale Lenkradeinschlag in etwa 90 Grad beträgt.

14. Kraftfahrzeug nach einem der vorhergehenden Ansprüche,
bei dem das Lenkrad oben offen ausgeführt ist.

15. Kraftfahrzeug nach einem der vorhergehenden Ansprüche,
bei dem die obere Hälfte des Lenkrades kein radiales Lenkradspeichenende aufweist.

16. Kraftfahrzeug nach einem der vorhergehenden Ansprüche,
bei dem der Bedienelementträger auch als Schaltwippe wirkt.

## Claims

1. A motor vehicle
with a steering wheel (LR), which comprises a steering wheel rim (LRK),
with a display panel (ANZF), which is arranged behind the steering wheel (LR), and
with at least one control element support (BT, BT1), which is arranged between the steering wheel rim (LRK) and the display panel (ANZF) and which is connected to the steering wheel (LR) in a rotationally fixed manner,
**characterised in that**
an operating element-supporting surface (F, F1) of the operating element support (BT, BT1) lies within the periphery of the steering wheel rim, and
the operating element-supporting surface (F, F1) and/or the operating element support (BT, BT1) are/is arranged predominantly or completely above the steering wheel shaft.

2. A motor vehicle according to claim 1,
wherein an operating element-supporting surface (F, F1) is disposed at the end of the operating element support (BT, BT1) remote from the steering shaft (SP).

3. A motor vehicle according to either one of the preceding claims,
wherein an operating element-supporting surface (F, F1) of the operating element support (BT, BT1) is greater than a cross-sectional area of the operating element support (BT, BT1) perpendicularly to the longitudinal orientation thereof.

4. A motor vehicle according to any one of the preceding claims,
wherein the operating element support (BT, BT1) is T-shaped, U-shaped or L-shaped.

5. A motor vehicle according to any one of the preceding claims, wherein the surface normal (f, f1) of the operating element-supporting surface (F, F1) lies approximately parallel to the longitudinal orientation of the operating element support (BT, BT1).

6. A motor vehicle according to any one of the preceding claims,
wherein an operating element (BE, BE1), which is arranged on the operating element-supporting surface (F, F1), can be actuated by a force approximately parallel to the surface normal of the operating element-supporting surface.

7. A motor vehicle according to any one of the preceding claims,
wherein the operating element support (BT, BT1) has a display area (AE) on the side facing away from the display panel (AF).

8. A motor vehicle according to any one of the preceding claims,
wherein the display area (AE) lies within the periphery of the steering wheel.

9. A motor vehicle according to any one of the preceding claims,
wherein the function assigned to an operating element (BE, BE1) is described by the display area (AE) closest to the operating element.

10. A motor vehicle according to any one of the preceding claims, wherein the function assigned to an operating element (BE, BE1) is changeable.

11. A motor vehicle according to any one of the preceding claims,
wherein the steering wheel (LR) supports a steering wheel operating element (LRB) on the side facing away from the display panel (ANZF), and wherein the function assigned to an operating element and/or the information presented on a display area are/is automatically changed in response to the actuation of the steering wheel operating element.

12. A motor vehicle according to any one of the preceding claims,
wherein the steering wheel (LR) supports a steering wheel operating element (LRB) on the side facing away from the display panel (ANZF), and wherein the function assigned to the steering wheel operating element and/or the information presented on a display area are/is automatically changed in response to the actuation of an operating element.

13. A motor vehicle according to any one of the preceding claims,
wherein the maximum steering wheel angle is approximately 90 degrees.

14. A motor vehicle according to any one of the preceding claims,
wherein the steering wheel is open upwardly.

15. A motor vehicle according to any one of the preceding claims,
wherein the upper half of the steering wheel does not have any radial steering wheel spokes.

16. A motor vehicle according to any one of the preceding claims,
wherein the operating element support also acts as a rocker switch.

## Revendications

1. Véhicule automobile comprenant :
- un volant (LR) avec une couronne (LRK),
- un champ d'affichage (ANZF) derrière le volant (LR), et
- au moins un support d'éléments de commande (BT, BT1) entre la couronne (LRK) du volant et le champ d'affichage (ANZF) et qui est relié solidairement au volant (LR),
**caractérisé en ce qu'**
- une surface portant un élément de commande (F, F1) du support d'éléments de commande (BT, BT1) se situe à l'intérieur de la périphérie de la couronne du volant, et
- la surface portant un élément de commande (F, F1) et/ou le support d'éléments de commande (BT, BT1) se trouve principalement ou complètement au-dessus de la broche du volant.

2. Véhicule automobile selon la revendication 1 selon lequel l'extrémité du support d'éléments de commande (BT, BT1) à l'opposé de la broche (SP) du volant a une surface portant un élément de manoeuvre (F, F1).

3. Véhicule automobile selon l'une des revendications précédentes selon lequel la surface portant un élément de commande (F, F1) du support d'élément de commande (BT, BT1) est plus grande que la surface de la section du support d'éléments de commande (BT, BT1) perpendiculairement à son orientation longitudinale.

4. Véhicule automobile selon l'une des revendications précédentes selon lequel le support d'éléments de commande (BT, BT1) est en forme de T, en forme de U ou en forme de L.

5. Véhicule automobile selon l'une des revendications précédentes selon lequel la normale (f, f1) à la surface portant l'élément de manoeuvre (F, F1) est sensiblement parallèle à l'orientation longitudinale du support d'éléments de commande (BT, BT1).

6. Véhicule automobile selon l'une des revendications précédentes selon lequel un élément de commande (BE, BE1) situé sur la surface portant un élément de commande (F, F1) s'actionne par une force sensiblement parallèle à la normale à la surface portant l'élément de commande.

7. Véhicule automobile selon l'une des revendications précédentes selon lequel le support d'éléments de commande (BT, BT1) comporte une surface d'affichage (AE) sur le côté opposé au champ d'affichage (AF).

8. Véhicule automobile selon l'une des revendications précédentes selon lequel la surface d'affichage (AE) se situe à l'intérieur de la périphérie du volant.

9. Véhicule automobile selon l'une des revendications précédentes selon lequel la surface d'affichage (AE) la plus proche d'un élément de commande (BE, BE1) décrit la fonction associée à cet élément de commande.

10. Véhicule automobile selon l'une des revendications précédentes selon lequel la fonction associée à un élément de commande (BE, BE1) est variable.

11. Véhicule automobile selon l'une des revendications précédentes selon lequel le volant (LR) porte sur le côté opposé au champ d'affichage (ANZF), un élément de commande de volant (LRB) et en réaction à l'actionnement de l'élément de commande de volant, la fonction associée à l'élément de commande et/ou l'information présentée sur une surface d'affichage sont modifiées automatiquement.

12. Véhicule automobile selon l'une des revendications précédentes selon lequel le volant (LR) porte un élément de commande de volant (LRB) sur le côté opposé au champ d'affichage (ANZF) et en réaction à l'actionnement de l'élément de commande, la fonction associée à l'élément de commande du volant et/ou l'information présentée sur la surface d'affichage changent automatiquement.

13. Véhicule automobile selon l'une des revendications précédentes selon lequel le braquage maximum du volant est de l'ordre de 90°.

14. Véhicule automobile selon l'une des revendications précédentes selon lequel le volant est ouvert dans sa partie supérieure.

15. Véhicule automobile selon l'une des revendications précédentes selon lequel la moitié supérieure du volant ne comporte pas de rayon.

16. Véhicule automobile selon l'une des revendications précédentes selon lequel le support d'élément de commande fonctionne comme élément basculant.
